# EUROPÄISCHE PATENTSCHRIFT

(11) **EP 2 954 598 B1**
(45) Veröffentlichungstag und Bekanntmachung des Hinweises auf die Patenterteilung: **30.11.2016**
(21) Anmeldenummer: 14709869.3
(22) Anmeldetag: 03.02.2014
(51) Int. Cl.: H01R 13/512, H01R 13/52, H02G 15/013, H02G 3/22, H01R 13/622, H01R 13/502

(54) **KABELFIXIERUNG**
CABLE FIXING MEANS
DISPOSITIF DE FIXATION DE CÂBLE

(30) Priorität: 05.02.2013 DE 102013101120
(43) Veröffentlichungstag der Anmeldung: 16.12.2015
(73) Patentinhaber: HARTING Electronics GmbH, 32339 Espelkamp (DE)
(72) Erfinder: LINDKAMP, Marc, 32312 Lübbecke (DE)
(86) Internationale Anmeldenummer: PCT/DE2014/100026
(87) Internationale Veröffentlichungsnummer: WO 2014/121783

(56) Entgegenhaltungen:
- EP-A2- 2 395 609
- WO-A2-2009/055681
- DE-A1- 4 333 628
- DE-U1-202007 003 513
- US-A- 5 746 454
- US-A- 6 086 400

## Beschreibung

Die Erfindung betrifft eine Kabelfixierung nach dem Oberbegriff des unabhängigen Anspruch 1.

Derartige Kabelfixierungen werden benötigt, um ein Kabel an einem Steckverbindergehäuse, einer Gehäusewand oder sonstigen Kabelabgängen mechanisch zu fixieren. Zudem ist je nach Ausführung auch eine Dichtfunktion gegen Umwelteinflüsse wünschenswert.

Aus dem Stand der Technik sind verschiedene Ausführungen solcher Kabelfixierungen bekannt. Die bekanntesten und weitverbreitetsten sind Kabelverschraubungen, bei welchen mittels eines aufschraubbaren Druckstückes ein Dichtelement zusammengequetscht wird und so ein eingeführtes Kabel fixiert und abgedichtet wird.

Die DE2631996C3 zeigt beispielsweise ein Verschraubung zur Ein- und Durchführung, Abdichtung und Zugentlastung von Kabeln oder Leitungen wobei eine Druckschraube Klemmzungen mit einer eingelegten Dichtung zusammendrücken und so ein eingeführte Kabel pressen und abdichten.

Die WO2011042005A2 zeigt einen Steckverbinder dessen Kabelabgang mit einem Kunststoff umgossen ist. Durch den Kunststoffmantel wird der Steckverbinder irreversibel verschlossen und abgedichtet. Ein solcher Prozess zum Umgießen ist jedoch technisch aufwendig, schwer zu kontrollieren und daher teuer.

Die EP 2395609 A2 zeigt eine Verbindungskopplung wobei das Druckelement und der kabelabgangsstutzen Rastungen aufweisen.

Nachteilig an erstgenannten, den aus dem Stand der Technik bekannten Lösungen ist, dass die Kabelfixierungen meist über ein Gewinde verschraubt werden. Diese Gewindeverbindung kann mehrfach wieder geöffnet und verschlossen werden. Eine Sicherstellung vor Manipulationen der Kabelfixierung ist so nicht gegeben.

Zweitgenannte, aus dem Stand der Technik bekannte Lösung, welche den Kabelabgang zur Fixierung umgießen sind zu einer Schraubverbindung keine Alternative, da der Spritzgießvorgang schlecht gesteuert werden kann und häufig nicht zu sauberen, funktionsfähigen Ergebnissen führt. Zudem ist ein Umgießen zeitlich sehr aufwendig und benötigt sehr teure Spritzgießvorrichtungen.

Die Aufgabe der Erfindung besteht darin eine Kabelfixierung so auszubilden, dass diese manipulationssicher gestaltet ist oder zumindest eine Manipulation erkennen lässt.

Die Aufgabe wird durch die kennzeichnenden Merkmale des Gegenstands des unabhängigen Anspruchs 1 gelöst.

Vorteilhafte Ausgestaltungen der Erfindung sind in den Unteransprüchen angegeben.

Die Erfindung ist eine, im Allgemeinen aus dem Stand der Technik bekannte, Kabelverschraubung. Durch Aufschrauben eines Druckelements auf einen Kabelabgangsstutzen wird ein, sich zwischen Druckelement und Kabelabgangsstutzen befindliches Dichtelement zusammengequetscht. Axial weisen Druckelement, Kabelabgangsstutzen und Dichtelement eine Öffnung zur Durchführung eines zu fixierenden Kabels auf.

Durch das Zusammenquetschen des Dichtelements wird ein durch die Kabelfixierung geführtes Kabel radial verklemmt und abgedichtet. Erfindungsgemäß verrasten beim Aufschrauben des Druckelements auf den Kabelabgangsstutzen selbige irreversibel miteinander. Ein erneutes Lösen des aufgeschraubten Druckelements vom Kabelabgangsstutzen ist nicht möglich.

Die Verrastung von Druckelement und Kabelabgangsstutzen miteinander geschieht im Wesentlichen durch Rastelemente. Die Rastelemente sind so am Druckelement und Kabelabgangsstutzen angeformt, dass ein Aufschrauben möglich, ein Abschrauben jedoch nicht mehr möglich ist.

Die einzelnen Rastzähne der Rastelemente können wahlweise axial oder radial zur Längsachse der Kabelfixierung ausgerichtet sein.

In einer besonderen Ausführungsform sind die Rastelemente des Kabelabgangsstutzens nicht direkt an selbigem angeformt, sondern an einem Rastring. Der Rastring ist zweckmäßig nicht drehbar, jedoch reversibel auf den Kabelabgangsstutzen aufsetzbar.

Bei Aufschrauben des Druckelements auf den Kabelabgangsstutzen verrasten die Rastelemente des Kabelabgangsstutzens mit den Rastelementen des Rastrings. Da der Rastring nicht drehbar auf dem Kabelabgangsstutzen sitzt, ist ein Abdrehen des Druckelements nicht möglich.

In einer speziellen Ausführungsform verfügt der Rastring über eine Sollbruchstellt. Sollte das Druckelement wider der Rastung abgeschraubt werden, kann der Rastring an besagter Sollbruchstelle aufbrechen und ein Abschrauben des Druckelements ermöglichen.

Der Rastring ermöglicht so eine Siegelfunktion. Manipulationen und unbefugtes Öffnen der Kabelfixierung sind so direkt vom Anwender erkennbar.

Durch Ersetzten des zerstörten Rastringes durch einen neuen kann die Kabelfixierung wieder verschlossen und erneut "verplombt" werden. Ein Ersetzen von weitern Bauteilen der Kabelfixierung ist nicht nötig.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines Steckverbinders mit einer nicht montierten Kabelfixierung;
- Fig. 2: die Kabelfixierung aus Fig. 1 aus einer weiteren perspektivischen Darstellung; und
- Fig. 3: die vollständig montierte und verschraubte Kabelfixierung.

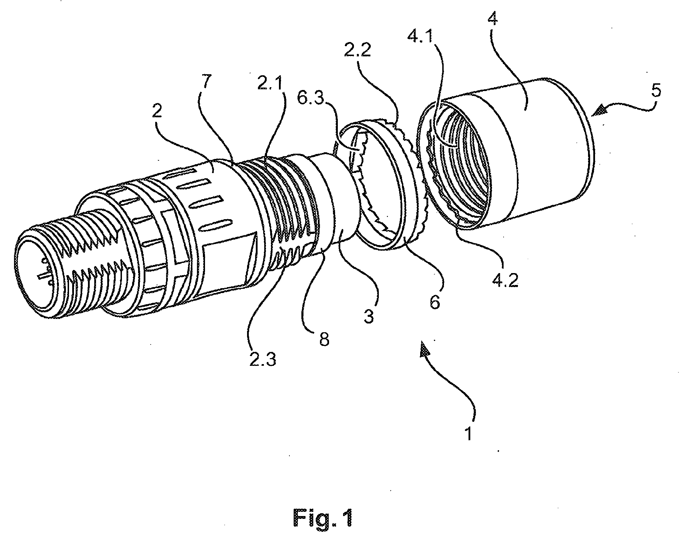

Die Figur 1 zeigt einen Rundsteckverbinder mit einer erfindungsgemäßen Kabelfixierung 1. Im linken Bereich der Figur ist die Steckseite des Rundsteckverbinders dargestellt. Auf die Elemente des Rundsteckverbinders wird hier nicht näher eingegangen. Im rechten Bereich der Figur sind die in Explosionsansicht dargestellten Elemente der Kabelfixierung 1 am Rundsteckverbinder angeordnet.

Im Wesentlichen besteht die Kabelfixierung 1 aus einem, hier am Rundsteckverbinder angeformten, Kabelabgangsstutzen 2, einem Dichtelement 3, sowie einem Druckelement 4.

Sowohl der Kabelabgangsstutzen 2, als auch das Druckelement 4 verfügen jeweils über ein Gewinde 2.1 bzw. 4.1, die miteinander verschraubbar sind. Durch Aufschrauben des Druckelements 4 auf den Kabelabgangsstutzen 2 wird das Dichtelement 3, welches in den Kabelabgangsstutzen 2 eingesetzt ist, zusammengequetscht.

Die Kabelfixierung 1 bildet eine durchgehende Öffnung 5, welche zum Einführen es Kabels geeignet ist. Ein eingeführtes Kabel kann so mittels des zusammengequetschten Dichtelements 3 mechanisch fixiert und gegen äußere Einflüsse abgedichtet werden.

Erfindungsgemäß weist das Druckelement 4 eine Rastung 4.2 auf, welche sich in dieser Ausführungsform auf der Innenseite des Druckelements 4 befinden. Diese greift in eine Rastung 2.2, welche verdrehsicher am Kabelabgangsstutzen 2 angebracht ist und verhindert so ein Abdrehen des Druckelements 4.

In dieser speziellen, dargestellten Ausführungsform ist die Rastung 2.2 nicht direkt am Kabelabgangsstutzen 2 angeformt, sondern auf einem Rastring 6 vorgesehen. Der Rastring 6 ist auf den Kabelabgangsstutzen 2 aufsteckbar. Anformungen 6.3 auf der Innenseite des Rastrings 6 greifen in Ausnehmungen 2.3 des Kabelabgangsstutzen 2 ein. Dadurch kann der Rastring 6 verdrehsicher auf den Kabelabgangsstutzen 2 aufgesetzt werden.

Zwischen dem Kabelabgangsstutzen 2 und dem Rastring 6 ist zudem ein Federelement 7 vorgesehen. Das in Rastrichtung der Rastungen 2.2 und 4.2 wirkende Federelement 7 gewährleistet ein sauberes Eingreifen der Verrasten 2.2 und 4.2 ineinander. Durch die hier axiale Kraft auf den Rastring 6 gegen das Druckelement 4 wird sichergestellt, dass die Rastungen sicher ineinander greifen und ein Abschrauben des Druckelements 4 nicht möglich ist.

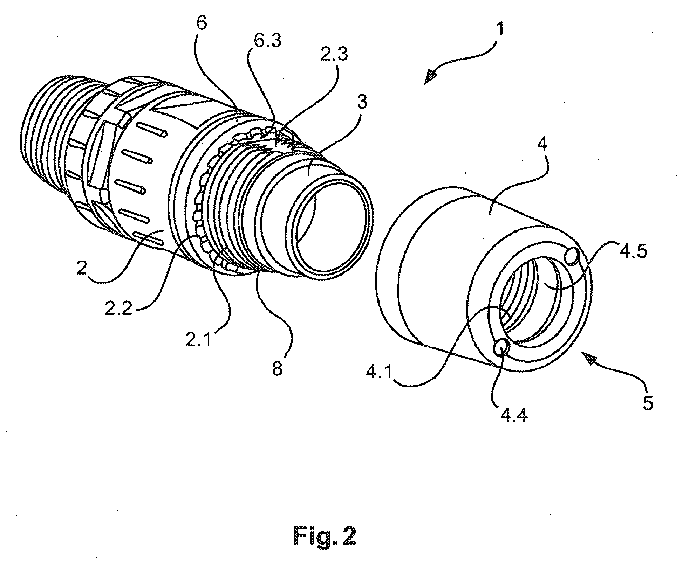

In der Fig. 2 ist die Kabelfixierung aus Fig. 1 in einer weiteren, perspektivischen Darstellung gezeigt. Der Rastring 6 ist hier bereits auf den Kabelabgangsstutzen 2 aufgesetzt. Zu erkennen ist, wie die Anformung 6.3 in die Ausnehmung 2.3 eingreift. Dadurch ist ein Verdrehen des Rastrings 6 auf den Kabelabgangsstutzen 2 nicht möglich.

In dieser Ausführungsform sind die Ausnehmungen 2.3 - eine sichtbar, eine auf der gegenüberliegenden Seite nicht sichtbar - in das Gewinde 2.1 des Kabelabgangsstutzens 2 eingebracht.

In der dargestellten Ausführungsform ist zusätzlich ein Gleitring 8 gezeigt, welcher ein Verdrehen des Dichtelements 3 beim Aufschrauben des Druckelements 4 verhindert. Derartige Gleitringe 8 sind aus dem Stand der Technik bereits mehrfach bekannt.

Das in dieser Ausführungsform gezeigte Druckelement 4 verfügt zweckmäßig über zwei Schlüssellöcher 4.4 die zur Betätigung des Druckelements 4 dienen. Da das Druckelement 4 hier keine Anformung zur Nutzung eines Gabelschlüssels oder Rändelung zur Handbetätigung besitzt, kann es mittels eines geeigneten Schüssels betätigt werden. So kann dem Anwender direkt die Möglichkeit einer Manipulation oder des Öffnens der Kabelfixierung 1 genommen werden.

In der Fig. 2 ist zudem eine Verjüngung 4.5 im Inneren des Druckelements 4 erkennbar. Diese Verjüngung 4.5 des Innendurchmessers sorgt - wie auch mehrfach aus dem Stand der Technik bekannt - für das Zusammenquetschen des Dichtelements 3, was eine Fixierung und Abdichtung eines eingeführten Kabels bewirken.

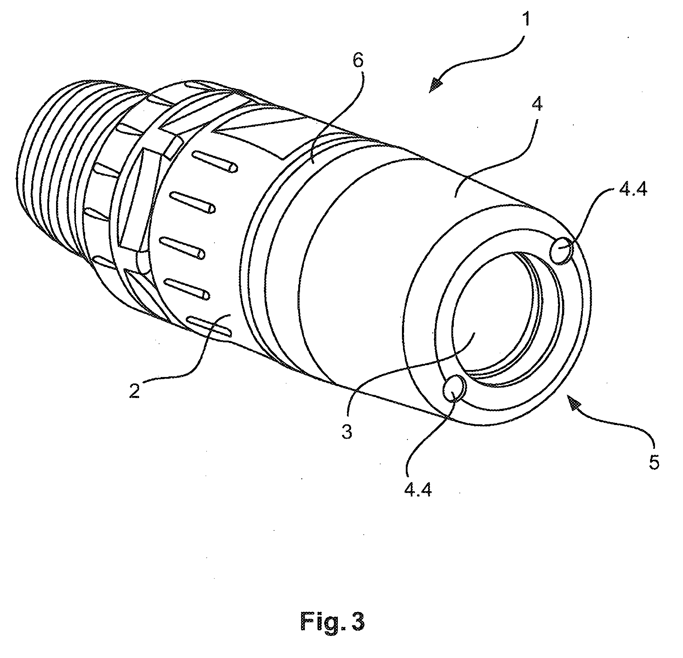

Die Fig. 3 zeigt eine vollständig montierte und verschraubte Kabelfixierung 1, wie sie in den Fig. 1 und 2 bereits gezeigt ist. Die Rastung 4.2 des vollständig aufgeschraubten Druckelements 4 greift in Rastung 2.2 des Rastrings 6 ein. Ein Öffnen der Kabelfixierung 1 ist nur durch Abschrauben des Druckelements 4, mittels eines entsprechenden Schlüssels für die Schlüssellöcher 4.4 möglich, wobei das Öffnen eine Zerstörung des Rastrings 6 mit sich bringen würde.

Zweckmäßig kann dafür eine Sollbruchstelle im Rastring 6 vorgesehen werden. So kann sichergestellt werden, dass bei Öffnen der Kabelfixierung 1 nur dieser versagt und zerstört wird. Der so als Siegelring genutzte Rastring 6 kann einfach und kostengünstig ersetzt werden um ein erneutes Verplomben der Kabelfixierung 1 zu ermöglichen.

### Bezugszeichenliste

- 1.: Kabelfixierung
- 2.: Kabelabgangsstutzen
- 2.1: Gewinde
- 2.2: Rastung
- 2.3: Abflachung
- 3.: Dichtelement
- 4.: Druckelement
- 4.1: Gewinde
- 4.2: Rastung
- 4.4: Schlüssellöcher
- 4.5: Verjüngung
- 5.: durchgehende Öffnung
- 6.: Rastring
- 6.3: Anformung
- 7.: Federelement
- 8.: Gleitring

## Patentansprüche

1. .Kabelfixierung (1), zur mechanischen Befestigung eines Kabels an
einem Kabelabgang,
bestehend aus einem Kabelabgangsstutzen (2), einem Dichtelement (3) und einem Druckelement (4),
wobei der Kabelabgangsstutzen (2) ein erstes Gewinde (2.1) aufweist, das Druckelement (4) ein zweites Gewinde (3.1) aufweist und die beiden Gewinde (2.1, 3.1) so zusammenwirken, dass das Druckelement (4) auf den Kabelabgangsstutzen (2) aufschraubbar ist,
wobei das Dichtelement (3) zwischen dem Kabelabgangsstutzen (2) und dem Druckelemerit (4) angeordnet ist,
und wobei die Bestandteile (2, 3, 4) der Kabelfixierung (1) eine durchgehende Öffnung (5) aufweist, die zur Aufnahme eines zu befestigenden Kabels dient,
wobei das Druckelement (4) eine Rastung (4.2) aufweist und der Kabelabgangsstutzen (2) eine Rastung (2.2) aufweist,
wobei die Rastungen (2.2, 4.2) so ineinandergreifen, dass ein Lösen der miteinander verschraubten Gewinde (2.1, 3.1) verhindert wird,
wobei die Rastungen (2.2, 4.2) jeweils von einer umlaufenden Rastverzahnung gebildet werden, wobei die Rastung (2.2) gegenläufig zur Rastung (4.2) ausgebildet ist,
wobei die Rastung (2.2) auf einem zusätzlichen Rastelement (6) angeformt ist, welches verdrehsicher auf den Kabelabgangsstutzen (2) aufsetzbar ist,
**dadurch gekennzeichnet, dass**
das Rastelement (6) eine Siegelfunktion aufweist, wobei das unbeschädigte Rastelement (6) Manipulationen an der Kabelfixierung (1) ausschließt,
wobei das Rastelement (6) zumindest eine Sollbruchstelle aufweist, und dass durch Abschrauben des Druckelements (4), wider der Rastung (2.2, 4.2), das Rastelement (6) an der Sollbruchstelle aufbrechbar ist.

2. . Kabelfixierung nach Anspruch 1,
**dadurch gekennzeichnet, dass**
das Rastelement (6) als Ring ausgebildet ist und an mindestens einer Abflachung (2.3) am Kabelabgangsstutzen (2) durch zumindest eine entsprechende Anformung (6.3) am Rastelement (6) verdrehsicher gehalten wird.

3. . Kabelfixierung nach einem der Ansprüche 1 oder 2,
**dadurch gekennzeichnet, dass**
ein Federelement (7) vorgesehen ist, welches das Rastelement (6) gegen die Rastungen (2.2, 4.2) federbeaufschlagt.

4. . Kabelfixierung nach Anspruch 3,
**dadurch gekennzeichnet, dass**
das Federelement (7) ein elastisch verformbarer Kunststoffring ist.

5. . Kabelfixierung nach einem der vorstehenden Ansprüche,
**dadurch gekennzeichnet, dass**
die Rastungen (2.2, 4.2) in axialer Richtung der Gewinde (2.1, 4.1) ausgebildet sind.

6. . Kabelfixierung nach einem der Ansprüche 1 bis 4,
**dadurch gekennzeichnet, dass**
die Rastungen (2.2, 4.2) in radialer Richtung zu den Gewinden (2.1, 4.1) ausgebildet sind.

## Claims

1. Cable fixing means (1) for mechanically fastening a cable to a cable outlet,
comprising a cable outlet connector (2), a sealing element (3) and a pressure element (4),
wherein the cable outlet connector (2) has a first thread (2.1), the pressure element (4) has a second thread (3.1), and the two threads (2.1, 3.1) interact such that the pressure element (4) can be screwed onto the cable outlet connector (2),
wherein the sealing element (3) is arranged between the cable outlet connector (2) and the pressure element (4),
and wherein the constituent parts (2, 3, 4) of the cable fixing means (1) have a continuous opening (5) which serves to receive a cable which is to be fastened,
wherein the pressure element (4) has a latching means (4.2) and the cable outlet connector (2) has a latching means (2.2),
wherein the latching means (2.2, 4.2) engage one in the other such that the threads (2.1, 3.1) which are screwed to one another are prevented from becoming detached,
wherein the latching means (2.2, 4.2) are each formed by a circumferential latching tooth system, wherein the latching means (2.2) is designed to run in the opposite direction to the latching means (4.2),
wherein the latching means (2.2) is integrally formed on an additional latching element (6) which can be fitted onto the cable outlet connector (2) such that it cannot rotate,
**characterized in that**
the latching element (6) has a sealing function, wherein the undamaged latching element (6) precludes manipulation of the cable fixing means (1),
wherein the latching element (6) has at least one predetermined breaking point,
and **in that** the latching element (6) can be broken open at the predetermined breaking point by unscrewing the pressure element (4), against the latching means (2.2, 4.2).

2. Cable fixing means according to Claim 1,
**characterized in that**
the latching element (6) is in the form of a ring and is held on at least one flattened portion (2.3) on the cable outlet connector (2) by at least one corresponding integrally formed portion (6.3) on the latching element (6) such that it cannot rotate.

3. Cable fixing means according to either of Claims 1 and 2,
**characterized in that**
a spring element (7) is provided, which spring element spring-loads the latching element (6) against the latching means (2.2, 4.2).

4. Cable fixing means according to Claim 3,
**characterized in that**
the spring element (7) is an elastically deformable plastic ring.

5. Cable fixing means according to one of the preceding claims,
**characterized in that**
the latching means (2.2, 4.2) are formed in the axial direction of the threads (2.1, 4.1).

6. Cable fixing means according to one of Claims 1 to 4,
**characterized in that**
the latching means. (2.2, 4.2) are formed in the radial direction with respect to the threads (2.1, 4.1).

## Revendications

1. Dispositif de fixation de câble (1), pour la fixation, mécanique d'un câble à une sortie de câble, se composant d'un embout de sortie de câble (2), d'un élément d'étanchéité (3) et d'un élément de pression (4),
dans lequel l'embout de sortie de câble (2) présente un premier filet (2.1), l'élément de pression (4) présente un deuxième filet (3.1) et les deux filets (2.1, 3.1) coopèrent de telle manière que l'élément de pression (4) puisse être vissé sur l'élément de sortie de câble (2),
dans lequel l'élément d'étanchéité (3) est disposé entre l'embout de sortie de câble (2) et l'élément de pression (4),
et dans lequel les composants (2, 3, 4) du dispositif de fixation de câble (1) présentent une ouverture continue (5), qui sert à recevoir un câble à fixer,
dans lequel l'élément de pression (4) présente un crénelage (4.2) et l'embout de sortie de câble (2) présente un crénelage (2.2),
dans lequel les crénelages (2.2, 4.2) s'engagent l'un dans l'autre, de telle manière qu'un desserrage des filets vissés l'un avec l'autre (2.1, 3.1) soit empêché,
dans lequel les crénelages (2.2, 4.2) sont chacun dotés d'une denture d'accrochage périphérique, dans lequel le crénelage (2.2) est réalisé en sens contraire du crénelage (4.2),
dans lequel le crénelage (2.2) est formé sur un élément d'accrochage supplémentaire (6), qui peut être placé sans rotation sur l'embout de sortie de câble (2), **caractérisé en ce que**
l'élément d'accrochage (6) présente la fonction d'un sceau, dans lequel l'élément d'accrochage intact (6) exclut des manipulations au dispositif de fixation de câble (1),
dans lequel l'élément d'accrochage (6) présente au moins une zone de rupture théorique, et **en ce que** l'élément d'accrochage (6) peut se rompre à la zone de rupture théorique par dévissage de l'élément de pression (4), à l'encontre du crénelage (2.2, 4.2).

2. Dispositif de fixation de câble selon la revendication 1, **caractérisé en ce que** l'élément d'accrochage (6) est réalisé en forme d'anneau et est maintenu contre la rotation sur au moins un méplat (2.3) sur l'embout de sortie de câble (2) par au moins un profil de forme correspondante (6.3) sur l'élément d'accrochage (6).

3. Dispositif de fixation de câble selon une des revendications 1 ou 2, **caractérisé en ce qu'**il est prévu un élément de ressort (7), qui applique de façon élastique l'élément d'accrochage (6) contre les crénelages (2.2, 4.2).

4. Dispositif de fixation de câble selon la revendication. 3, **caractérisé en ce que** l'élément de ressort (7) est un anneau en matière plastique déformable élastiquement.

5. Dispositif de fixation de câble selon l'une quelconque des revendications précédentes, **caractérisé en ce que** les crénelages (2.2, 4.2) sont formés dans la direction axiale des filets (2.1, 4.1).

6. Dispositif de fixation de câble selon l'une quelconque des revendications 1 à 4, **caractérisé en ce que** les crénelages (2.2, 4.2) sont formés en direction radiale par rapport aux filets (2.1, 4.1).
